# EUROPEAN PATENT APPLICATION

(11) **EP 4 687 177 A2**
(43) Date of publication of application: **04.02.2026**
(21) Application number: 25187977.1
(22) Date of filing: 07.07.2025
(51) Int. Cl.: H01M 4/04, H01M 10/04

(54) **APPARATUS FOR ROLL-PRESSING AN ELECTRODE PLATE OF A SECONDARY BATTERY, AND APPARATUS AND METHOD FOR MANUFACTURING A SECONDARY BATTERY USING THE SAME**

(30) Priority: 02.08.2024 KR 20240103474
(71) Applicant: SAMSUNG SDI CO., LTD., Yongin-si, Gyeonggi-do 17084 (KR)
(72) Inventor: KIM, Yongsoo, 17084 Yongin-si (KR); LEE, Hyerin, 17084 Yongin-si (KR)
(74) Representative: Marks & Clerk LLP

(57) **Abstract**

An apparatus for roll-pressing an electrode plate of a secondary battery includes: a first-stage press roller and a second-stage press roller configured to sequentially roll-press the electrode plate. A surface of the first-stage press roller configured to contact the electrode plate has a first roughness, and a surface of the second-stage press roller configured to contact the electrode plate has a second roughness.

## Description

### BACKGROUND

### 1. Field

The present disclosure relates to an apparatus for roll-pressing an electrode plate of a secondary battery, and an apparatus and method for manufacturing an electrode plate of a secondary battery using the same.

### 2. Description of the Related Art

Secondary batteries are batteries that can be charged and discharged, unlike primary batteries that cannot be recharged. In general, a secondary battery includes an electrode assembly including positive and negative electrode plates and a separator. The positive and negative electrode plates may be manufactured through processes such as coating, roll-pressing, drying, slitting, notching, and the like. The electrode assembly is manufactured by winding or stacking the positive and negative electrode plates manufactured in this manner with the separator interposed therebetween.

The coating process is a process of coating an active material mixture (e.g., a slurry or powder) on one side or both sides of each of positive and negative electrode substrates. The roll-pressing (or calendering) process compresses and stretches the mixture-coated substrate with a roller to make the substrate thin and flat, thereby improving the density, increasing the bonding strength between the surface and the active material, and allowing lithium ions to smoothly move so that the output and performance of the battery are increased.

Roll-pressing may be performed by a main roller that comes into contact with the surface of the coated electrode plate, but when the roll-pressing is performed with excessive pressure, stress accumulates in the electrode, causing electrode defects (e.g., wave, skew, camber effect, or the like). The camber effect occurs particularly frequently in the electrode plates of tabless batteries and is a serious cause of failure. In addition, when an electrode is bent during a battery manufacturing process, miss winding or electrode breakage may occur, increasing the defect rate.

The above information disclosed in this Background section is for enhancement of understanding of the background of the present disclosure, and therefore, it may contain information that does not constitute related (or prior) art.

### SUMMARY

Embodiments of the present disclosure provide a press rolling apparatus capable of minimizing defects in an electrode plate during a roll-pressing process to improve the quality of the electrode plate by avoiding defects, particularly, the camber effect in which an electrode is bent.

According to one aspect of the present disclosure, an apparatus for roll-pressing an electrode plate of a secondary battery includes a first-stage press roller and a second-stage press roller configured to sequentially roll-press the electrode plate. A surface of the first-stage press roller configured to contact the electrode plate has a first roughness, and a surface of the second-stage press roller configured to contact the electrode plate has a second roughness.

According to another aspect of the present disclosure, an apparatus for manufacturing an electrode plate of a secondary battery includes a rolling unit including a first-stage press roller and a second-stage press roller configured to sequentially roll-press the electrode plate. A surface of the first-stage press roller of the rolling unit configured to contact the electrode plate has a first roughness, and a surface of the second-stage press roller of the rolling unit configured to contact the electrode plate has a second roughness.

According to another aspect of the present disclosure, a method of manufacturing an electrode plate of a secondary battery includes roll-pressing the electrode plate with a first-stage press roller and roll-pressing the roll-pressed electrode plate by using a second-stage press roller. A surface of the first-stage press roller contacting the electrode plate has a first roughness, and a surface of the second-stage press roller contacting the electrode plate has a second roughness.

Aspects and features of the present disclosure are not limited to those described above, and other aspects and features not specifically mentioned herein will be clearly understood by those skilled in the art from the description of the present disclosure below.

At least some of the above and other features of the invention are set out in the claims.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a schematic illustration of an electrode assembly that may be manufactured by using an electrode plate manufactured by a method/apparatus for manufacturing an electrode plate of a secondary battery according to an embodiment of the present disclosure;
FIG. 2 is a schematic illustration of a pouch-type secondary battery including the electrode assembly shown in FIG. 1;
FIG. 3 is a cross-sectional view of a cylindrical secondary battery including an electrode assembly that may be manufactured by using the electrode plate manufactured by the method/apparatus for manufacturing an electrode plate of a secondary battery according to an embodiment of the present disclosure;
FIG. 4 is a cross-sectional view of a prismatic secondary battery including an electrode assembly that may be manufactured by using the electrode plate manufactured by the method/apparatus for manufacturing an electrode plate of a secondary battery according to an embodiment of the present disclosure;
FIG. 5 is a schematic diagram of a process of manufacturing the electrode plate of the electrode assembly illustrated in FIG. 1;
FIG. 6 is a schematic plan view of a coated substrate shown in FIG. 5;
FIG. 7 is a schematic diagram of an apparatus for roll-pressing an electrode plate of a secondary battery according to some embodiments of the present disclosure;
FIGS. 8A to 8C show typical roughness values (Ra values) of first- and second-stage press rollers;
FIGS. 9A and 9B are graphs illustrating an effect of reducing damage to an electrode plate by reducing a roll-pressing pressure during double-stage roll-pressing according to embodiments of the present disclosure compared to single-stage roll-pressing;
FIGS. 10A and 10B are graphs illustrating a bending force of an electrode plate according to double-stage roll-pressing according to embodiments of the present disclosure being reduced compared to single-stage roll-pressing;
FIGS. 11A and 11B are scanning electron microscope (SEM) cross-sectional images of single-stage roll-pressing and double-stage roll-pressing, respectively, and porosity analysis values using mercury intrusion porosimetry; and
FIGS. 12A and 12B are 3D profiler analysis images of the electrode plate after single-stage roll-pressing and double-stage roll-pressing, respectively.

### DETAILED DESCRIPTION

Hereinafter, embodiments of the present disclosure will be described, in detail, with reference to the accompanying drawings. The terms or words used in the present specification and claims should not to be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of one or more embodiments of the present disclosure and do not represent all of the aspects and features of the present disclosure. Accordingly, it should be understood that there may be various equivalents and modifications that can replace or modify one or more embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

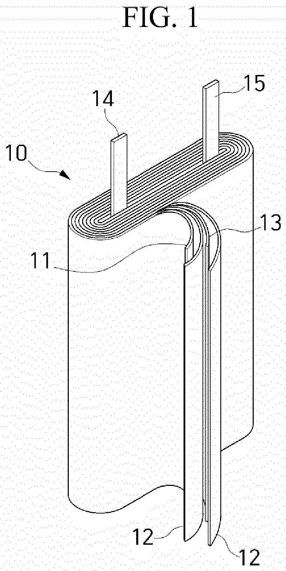

FIG. 1 is a schematic illustration of an electrode assembly 10 manufactured by using an electrode plate manufactured by a method/apparatus for manufacturing an electrode plate of a secondary battery according to an embodiment of the present disclosure.

The electrode assembly 10 may be formed by winding or stacking a first electrode plate 11, a separator 12, and a second electrode plate 13, which are each formed as thin plates or films. When the electrode assembly 10 is a wound stack, a winding axis may be parallel to the longitudinal direction of a case. In other embodiments, the electrode assembly 10 may be a stack type rather than a winding type, but the shape of the electrode assembly 10 is not limited in the present disclosure. In addition, the electrode assembly 10 may be a Z-stack electrode assembly in which a positive electrode plate and a negative electrode plate are inserted into both sides of a separator, which is then bent (or folded) into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate 11 of the electrode assembly 10 may act as a negative electrode, and the second electrode plate 13 may act as a positive electrode. Of course, the reverse is also possible.

The first electrode plate 11 may be formed by applying a first electrode active material, such as graphite or carbon, to a first electrode current collector formed of a metal foil, such as copper, a copper alloy, nickel, or a nickel alloy. The first electrode plate 11 may include a first electrode tab 14 (e.g., a first uncoated portion) that is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying a second electrode active material, such as a transition metal oxide, on a second electrode current collector formed of a metal foil, such as aluminum or an aluminum alloy. The second electrode plate 13 may include a second electrode tab 15 (e.g., a second uncoated portion) that is a region to which the second electrode active material is not applied. The second electrode tab 15 may be connected to an external second terminal. In some embodiments, the second electrode tab 15 may be formed by being cut in advance to protrude to (or protrude from) the other side (e.g., the opposite side) of the electrode assembly 10 when the second electrode plate 13 is manufactured, or the second electrode plate 13 may protrude to the other side of the electrode assembly 10 more than (e.g., farther than or beyond) the separator 12 without being separately cut.

In some embodiments, the first electrode tab 14 may be located on the left side of the electrode assembly 10, and the second electrode tab 15 may be located on the right side of the electrode assembly 10. In other embodiments, the first electrode tab 14 and the second electrode tab 15 may be located on one side (e.g., on the same side) of the electrode assembly 10 in the same direction.

Here, for convenience of description, the left and right sides are defined according to the electrode assembly 10 as oriented in FIG. 1, and the positions thereof may change when the secondary battery is rotated left and right or up and down.

The separator 12 prevents a short-circuit between the first electrode plate 11 and the second electrode plate 13 while allowing movement of lithium ions therebetween. The separator 12 may be made of, for example, a polyethylene film, a polypropylene film, a polyethylene-polypropylene film, or the like.

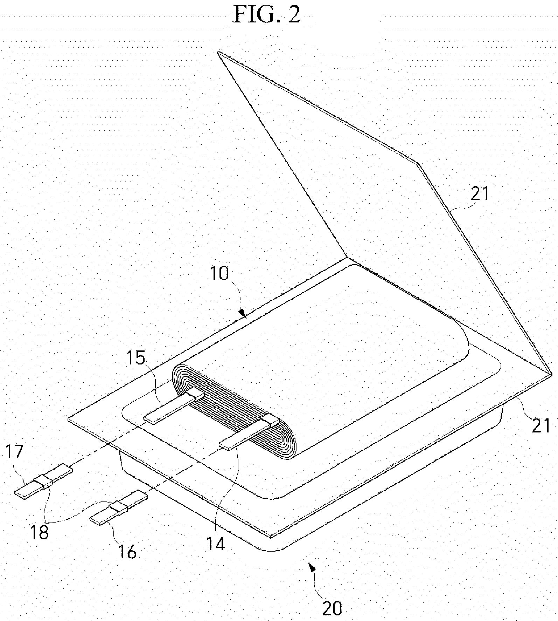

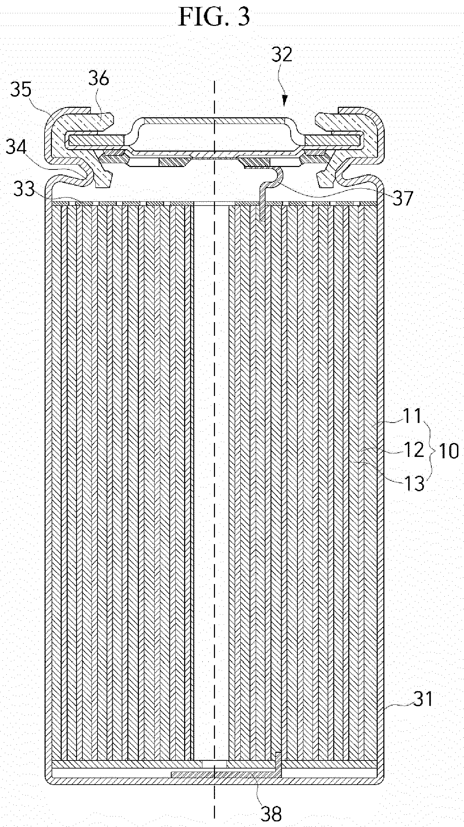

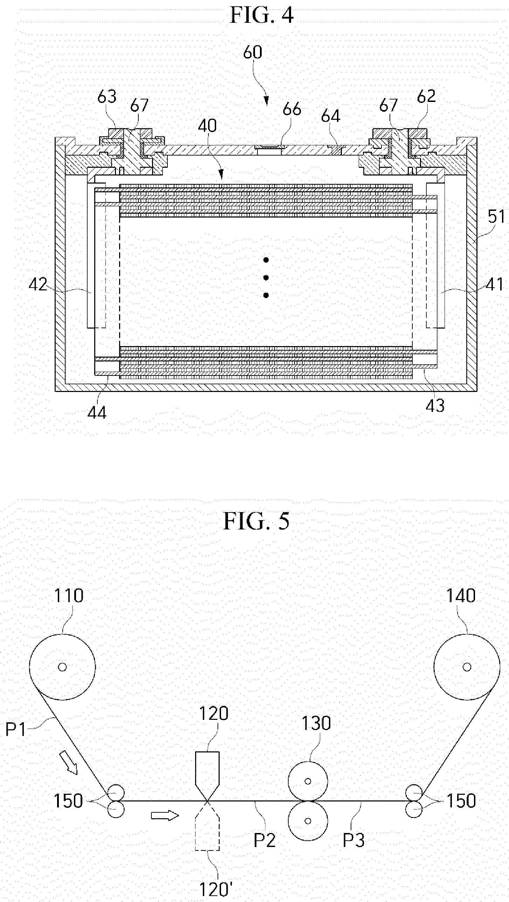

In some embodiments, the electrode assembly 10 may be accommodated in the case along with an electrolyte. In the case of a pouch-type secondary battery, an electrode assembly 10 may be accommodated in a pouch made of flexible material (see, e.g., FIG. 2). In the case of a cylindrical or prismatic secondary battery, an electrode assembly 10 may be accommodated in a cylindrical or prismatic metal case (see, e.g., FIGS. 3 and 4, respectively).

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO₆X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator 12 may be present between the first electrode plate 11 (e.g., the negative electrode) and the second electrode plate 13 (e.g., the positive electrode). As the separator 12, polyethylene, polypropylene, polyvinylidene fluoride, or a multilayer film including two or more layers thereof may be used.

The separator 12 may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 is a schematic illustration of a pouch-type secondary battery including the electrode assembly shown in FIG. 1.

The pouch-type secondary battery includes the electrode assembly 10 and a pouch 20 that accommodates the electrode assembly 10.

The electrode assembly 10 is the same as that illustrated in FIG. 1. The first electrode tab 14 and the second electrode tab 15 of the electrode assembly 10 may be electrically connected to respective external first and second terminal leads 16, 17 by welding. Each of the first terminal lead 16 and the second terminal lead 17 may be attached with (e.g., covered by) a tab film 18 for insulation from the pouch 20.

The pouch 20 may be sealed by having sealing parts 21 at the edges thereof come into contact with each other while accommodating the electrode assembly 10 therein, in which case the sealing may be achieved with the tab film 18 interposed between the sealing parts 21. The sealing parts 21 of the pouch 20 may each be made of a thermal fusion material that generally exhibits weak adhesion to metal. Thus, the pouch 20 may be sealed by interposing the thin tab film 18 between the sealing parts 21.

FIG. 3 is a cross-sectional view of a cylindrical secondary battery including an electrode assembly 10 manufactured by using the electrode plate manufactured by the method/apparatus for manufacturing an electrode plate of a secondary battery according to an embodiment of the present disclosure.

The cylindrical secondary battery may include electrode assembly 10, a case 31 accommodating the electrode assembly 10 and an electrolyte therein, a cap assembly 32 coupled to an opening in the case 31 to seal the case 31, and an insulating plate 33 positioned between the electrode assembly 10 and the cap assembly 32 inside the case 31.

The case 31 accommodates the electrode assembly 10 and the electrolyte, and, together with the cap assembly 32, forms the external appearance of the secondary battery. The case 31 may have a substantially cylindrical body portion and a bottom portion connected to one side (e.g., to one end) of the body portion. A beading part 34 (e.g., a bead) deformed inwardly may be formed in the body portion, and a crimping part 35 (e.g., a crimp) bent inwardly may be formed at an open end of the body portion.

The beading part 34 can reduce or prevent movement of the electrode assembly 10 inside the case 31 and can facilitate seating of a gasket 36 and the cap assembly 32. The crimping part 35 may firmly fix the cap assembly 32 by pressing the edge of the case 31 against the gasket 36. The case 31 may be formed of iron plated with nickel, for example.

The cap assembly 32 may be fixed to the inside of the crimping part 35 by the gasket 36 to seal the case 31. A first lead tab 37 drawn out from the electrode assembly 10 may be connected to the cap assembly 32, and a second lead tab 38 drawn out from the electrode assembly 10 may be electrically connected to the bottom of the casing 31.

FIG. 4 is a cross-sectional view of a prismatic secondary battery including an electrode assembly 40 manufactured by using the electrode plate manufactured by the method/apparatus for manufacturing an electrode plate of a secondary battery according to an embodiment of the present disclosure.

As shown in FIG. 4, a prismatic secondary battery may include an electrode assembly 40, a first current collector 41, a first terminal 62, a second current collector 42, a second terminal 63, a case 51, and a cap assembly 60.

The electrode assembly 40 may be formed by winding or stacking a first electrode plate, a separator, and a second electrode plate, which are each formed as thin plates or films. When the electrode assembly 40 is a wound stack, a winding axis may be parallel to the longitudinal direction of the case 51. In other embodiments, the electrode assembly 40 may be a stack type rather than a winding type, but the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent (or folded) into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

In the electrode assembly 40, the first current collector 41 and the second current collector 42 may be welded and connected to the first electrode tab 43 extending from the first electrode plate and the second electrode tab 44 extending from the second electrode plate, respectively. As mentioned above, in some embodiments in which the first electrode tab 43 and the second electrode tab 44 are located at the top of the electrode assembly 40, the first and second current collectors 41, 42 are located at the top of the electrode assembly 40.

As illustrated in FIG. 4, the first current collector 41 and the second current collector 42 are connected to the first terminal 62 and the second terminal 63 through connection members 67, respectively. In some embodiments, the connection members 67 may each have an outer peripheral surface that is threaded and may be fastened to the first terminal 62 and the second terminal 63 by screwing. However, the present disclosure is not limited thereto. For example, the connection members 67 may also be coupled to the first terminal 62 and the second terminal 63 by riveting or welding.

FIG. 5 is a schematic diagram of a process of manufacturing the electrode plate of the electrode assembly 10 illustrated in FIG. 1. Referring to FIG. 5, a supply roll 110 is a roll on which a substrate P1 for an electrode plate is wound. When an apparatus for manufacturing electrode plates according to an embodiment of the present disclosure is used to manufacture a positive electrode plate, the substrate P1 may be a metal foil including (or containing) aluminum (Al), for example, and when the apparatus for manufacturing electrode plates according to an embodiment of the present disclosure is used to manufacture a negative electrode plate, the substrate P1 may be a metal foil including (or containing) copper (Cu) or nickel (Ni).

A transfer roller 150 may be an idle roller that guides the substrate P1 as it is unwound from the supply roll 110 or a drive roller that applies a pulling force to unwind the substrate P1 from the supply roll 110. FIG. 5 illustrates an embodiment including a total of four transfer rollers 150 as an example, and the number and positions of transfer rollers 150 may be changed.

A coating unit 120 forms a coating layer by coating the substrate P1 with an electrode material slurry (e.g., a previously-prepared electrode material slurry).

The coated mixture may include an active material, and for example, when the apparatus for manufacturing an electrode plate according to an embodiment of the present disclosure is used to manufacture a positive electrode plate, the coated mixture may include an active material including a lithium transition metal oxide, a binder, and a volatile solvent. When manufacturing a negative electrode plate, the coated mixture may include the active material, the binder, and the solvent. In addition, both surfaces of the substrate P1, that is, an upper surface and a lower surface of the substrate P1, may be concurrently (or simultaneously) coated by adding a second coating unit 120' having the same configuration as the coating unit 120 to the lower surface of the substrate P1.

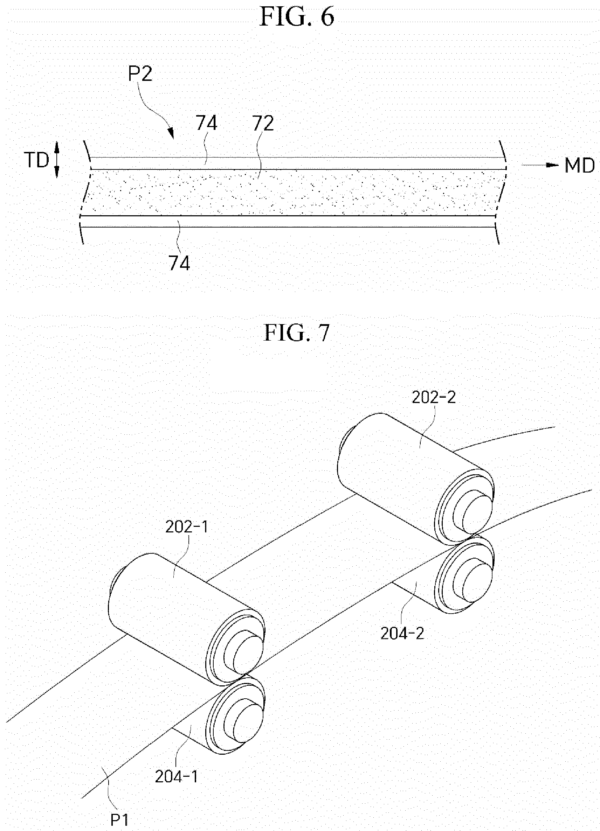

As shown in FIG. 6, the coated substrate P2 has a coated portion 72 coated with an active material mixture and an uncoated portion 74 that is left as it is without being coated. For reference, the width direction of the electrode plate is referred to as TD (transverse direction) and the longitudinal direction, which is a direction in which the electrode plate moves, is referred to as MD (machine direction). As an alternative to the single-row coating shown in FIG. 6, a multi-row coating method that concurrently (or simultaneously) coats a coating area in the form of multiple rows in the transverse direction TD of the substrate may be used. After going through a roll-pressing process, the multi-coated substrate may be cut in the machine direction MD in a slitting process to be separated into electrode plates for each row.

A roll-pressing unit 130 may press the substrate P2 coated with the mixture by the coating unit 120 described above by using a roller to produce a high-capacity, high-density secondary battery. The roll-pressing process is a process for increasing battery capacity by reducing the thickness of the electrode plate to increase the electrode density, improving the contact force between the substrate and the active material, and generating directionality in a crystal structure of the active material to facilitate the entry and exit of lithium ions. An electrode plate P3 that has been coated and roll-pressed is wound by a winding roll 140 and stored.

As mentioned above, the roll-pressing may be performed by a main roller (e.g., 130 in FIG. 5) that comes into contact with the surface of the coated electrode plate, but when the roll-pressing is performed with excessive pressure, stress accumulates in the electrode, causing electrode defects (e.g., wave, skew, camber effect, or the like). The camber effect occurs particularly frequently in the electrode plates of tabless cylindrical batteries and is a serious cause of failure. In addition, when an electrode is bent during a battery manufacturing process, miswinding or electrode breakage may occur, increasing the defect rate.

Table 1 below shows the roughness of two types of press rollers primarily used in the manufacture of the electrode plate of the secondary battery.

**Table 1**

| **Press Roller** | **Roll Type 1** | **Roll Type 2** |
|---|---|---|
| Roughness, Ra (µm) | 0.940 | 0.057 |
| Roughness, Rz (µm) | 6.317 | 0.580 |

In Table 1 above, two types of rollers, Ra=0.094 and 0.057, are primarily used as the press roller to manufacture the secondary battery. The surface roughness may vary depending on a degree of roller polishing, coating method, coating material (hrC (hard chrome), WC (tungsten carbide)), or the like.

As parameters representing the surface roughness of industrial products, definitions such as an arithmetic mean roughness Ra, a maximum height Ry, a 10-point average roughness Rz, an average spacing of irregularities Sm, an average spacing of local calculations S, a load length ratio tp, and the like are used. The surface roughness may be expressed as the arithmetic mean of each randomly extracted portion of a surface of an object.

When examining the effect of surface roughness of the press roller, it can be seen that the length of the surface at where the press roller and the electrode plate come into contact increases according to the surface roughness of the press roller. Therefore, as shown in Table 2 below, the lower the surface roughness, the less pressure is applied to the electrode plate by the roller for the same target thickness. Therefore, by controlling the roughness of the press roller to lower the roll-pressing pressure to achieve the desired thickness of the electrode plate, a phenomenon of an electrode being bent may be avoided or mitigated, damage applied to the electrode plate due to low roll-pressing strength may be reduced, and the occurrence of defects on the electrode surface may be reduced.

**Table 2**

| **Press Roll** | **Target Thickness** | **Pressure of Roll** |
|---|---|---|
| Roughness, Ra (µm) 0.940 | 141*µ*m | 1.945 ton/cm |
| Roughness, Ra (µm) 0.057 | 141*µ*m | 1.125 ton/cm |

Therefore, when diversifying the roughness of the press roller, the roll-pressing strength may be lowered, and thus, damage to the electrode plate may be reduced and defects in the electrode surface may be reduced. Therefore, because conditions for optimizing electrode plate damage reduction may be established, problems such as the camber effect may be improved.

In addition, an experiment on the roll-pressing strength when the number of times roll-pressing is performed (e.g., a number of roll-pressing stages) for the electrode plate was increased from the conventional one-time (single-stage) roll-pressing to two-time (double-stage) roll-pressing was conducted, and results in Table 3 (below) were obtained.

**Table 3**

| | Main roll roughness (Ra) | | Press thickness (µm) | | Press ratio (%) | | Roll-pressing pressure (ton/cm) | | Total roll-pressing pressure (ton/cm) |
|---|---|---|---|---|---|---|---|---|---|
| | First stage | Second stage | First stage | Second stage | First stage | Second stage | First stage | Second stage | |
| TEST 1 | 0.94 | - | 141 | - | 100 | - | 1.945 | - | 1.945 |
| TEST 2 | 0.057 | - | 141 | - | 100 | - | 1.321 | - | 1.321 |
| TEST 3 | 0.94 | 0.94 | 164.6 | 141 | 60 | 40 | 0.958 | 0.524 | 1.482 |
| TEST 4 | 0.057 | 0.057 | 164.6 | 141 | 60 | 40 | 0.901 | 0.275 | 1.176 |
| TEST 5 | 0.94 | 0.057 | 164.6 | 141 | 60 | 40 | 0.951 | 0.264 | 1.215 |
| TEST 6 | 0.057 | 0.94 | 164.6 | 141 | 60 | 40 | 0.895 | 0.214 | 1.109 |

TEST 1 and TEST 2 represent the conventional roll-pressing stages, and the total roll-pressing pressure at this time was 1.945 ton/cm and 1.321 ton/cm, respectively.

In Table 3, in TEST 6, the lowest roll-pressing pressure (1.109 ton/cm) was applied when roll-pressing is performed with the roughness of 0.057 (a first-stage roller) and 0.94 (a second-stage roller). In addition, in TEST 4, TEST 5, and TEST 6, the roll-pressing pressure was significantly reduced compared to the conventional single-stage roll-pressing. In particular, when the surface roughness of the first-stage press roller and the surface roughness of the second-stage press roller were different along with the double-stage roll-pressing process, the reduction in roll-pressing pressure was substantial, and furthermore, it can be seen that the pressure reduction was greater when the roughness of the first-stage press roller was smaller than the roughness of the second-stage press roller.

Therefore, according to embodiments of the present disclosure, further reducing the roll-pressing strength by diversifying the number of roll-pressing stages (the number of times) according to Table 3 in addition to diversifying the roughness of the press roller according to Table 2 can avoid or mitigate damage to the electrode plate.

FIG. 7 is a schematic diagram of an apparatus for roll-pressing an electrode plate of a secondary battery (secondary battery electrode plate roll-pressing apparatus) according to some embodiments of the present disclosure.

The roll-pressing apparatus may include first-stage press rollers 202-1, 204-1 and second-stage press rollers 202-2, 204-2 that sequentially roll-press an electrode plate P1 coated with an active material. In the first-stage press rollers, 202-1 refers to a first-surface press roller, and 204-1 refers to a second-surface press roller. Also, in the second-stage press rollers, 202-2 refers to a first-surface press roller and 204-2 refers to a second-surface press roller.

Because the electrode plate P1 is traveling in a MD (machine direction), the pair of upper and lower rollers on the left of FIG. 7 are the first-stage press rollers 202-1 and 204-1, and the pair of upper and lower rollers on the right of FIG. 7 are the second-stage press rollers 202-2 and 204-2.

The first-stage press rollers 202-1 and 204-1 may have a first roughness on surfaces in contact with a coated surface of the electrode plate P1, and the second-stage press rollers 202-2 and 204-2 may have a second roughness on surfaces in contact with the electrode plate P1. The first roughness and the second roughness may be based on Table 3 above.

Because the roughness of the press roller at the surface in contact with the coated surface of the electrode plate P1, when the electrode plate is cross-sectionally coated, the roughness of the first-stage press rollers 202-1 and 204-1 and the second-stage press rollers 202-2 and 204-2 may not be applied to the roller contacting an uncoated surface of the electrode plate. However, in an embodiment in which both surfaces of the electrode plate are coated, the first roughness and the second roughness are applied to both the first-stage press rollers 202-1 and 204-1 and the second-stage press rollers 202-2 and 204-2.

With reference to Table 3, surface roughness values of each press roller will be described.

In some embodiments, the first roughness of the first-stage press rollers 202-1, 204-1 and the second roughness of the second-stage press rollers 202-2, 204-2 may have the same Ra value. The Ra value may be in a range of about 0.02 to 0.09, and in one embodiment, may be 0.057.

In some other embodiments, the first roughness and the second roughness may have different Ra values. In such embodiments, the Ra value of at least one of the first roughness and the second roughness may be in a range of about 0.02 to 0.09, and in one embodiment, about 0.057, and the other Ra value may be in a range of about 0.5 to 1.5, and in one embodiment, about 0.94.

In some other embodiments, the first roughness may have a smaller Ra value than the second roughness has. In such embodiments, the Ra value of the first roughness may be in a range of about 0.02 to 0.09, and in one embodiment, about 0.057, and the Ra value of the second roughness may be in a range of about 0.5 to 1.5, and in one embodiment, about 0.94.

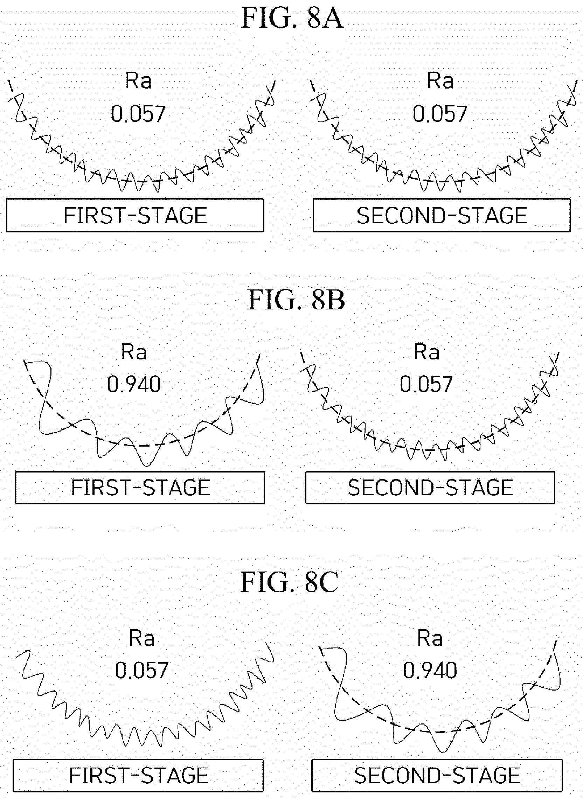

FIGS. 8A to 8C schematically show values of the roughness (Ra values) of the first and second-stage press rollers for TEST 4, TEST 5, and TEST 6 in Table 3. FIG. 8A is a schematic diagram of first- and second-stage press rollers corresponding to TEST 4, FIG. 8B is a schematic diagram of first- and second-stage press rollers corresponding to TEST 5, and FIG. 8C is a schematic diagram of first- and second-stage press rollers corresponding to TEST 6.

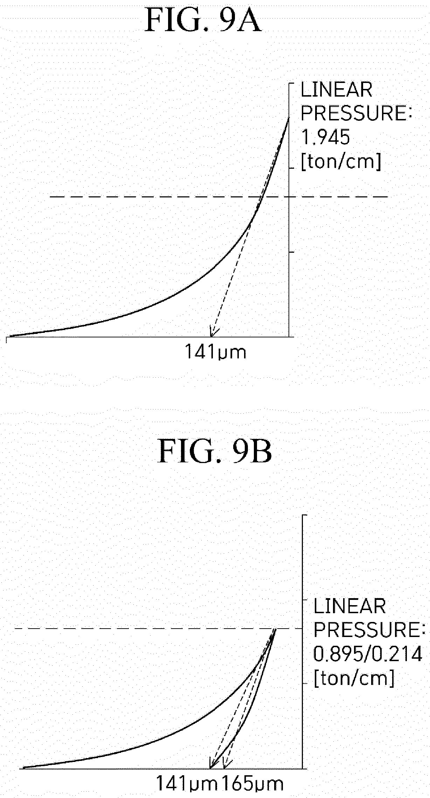

FIGS. 9A and 9B are graphs illustrating an effect of reducing damage to an electrode plate by reducing a roll-pressing pressure during second-stage roll-pressing of the present disclosure compared to first-stage roll-pressing. FIG. 9A shows a linear pressure in the case of single-stage roll-pressing with an existing press roller having Ra=0.94, showing that a linear pressure of about 1.945 ton/cm is required for roll-pressing to achieve a target thickness of 141 um. FIG. 9B shows that linear pressures of about 0.895 and 0.214 ton/cm for roll-pressing achieve a target thickness of 165 um in the single-stage roll-pressing and a target thickness of 141 um in the double-stage roll-pressing according to an embodiment of the present disclosure and, thus, the pressure is decreased.

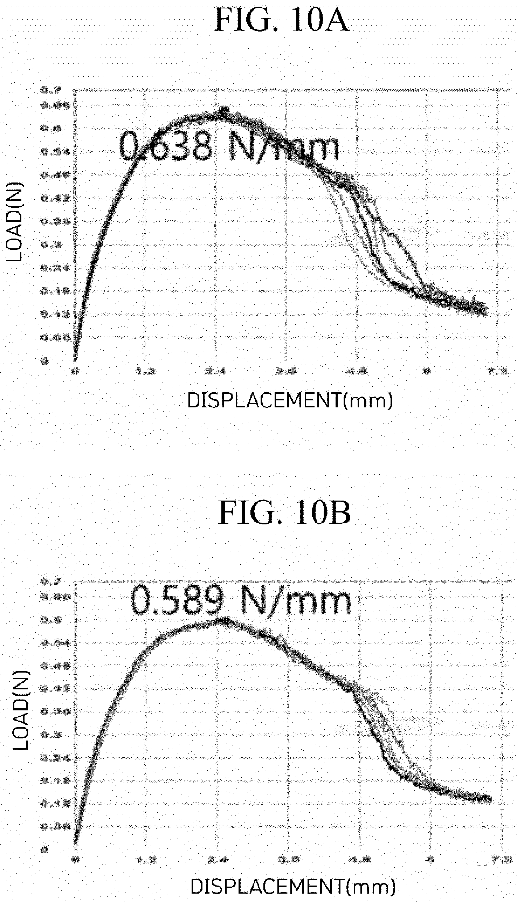

FIGS. 10A and 10B are graphs illustrating a bending force (which is an indicator of the force required to bend the electrode) of an electrode plate manufactured by using double-stage roll-pressing according to an embodiment of the present disclosure is reduced compared to single-stage roll-pressing. FIG. 10A shows that a bending force in the case of existing single-stage roll-pressing is 0.6387 N/mm, and FIG. 10B shows a bending force of 0.589 N/mm is achieved by double stage roll-pressing according to an embodiment of the present disclosure, proving that the surface of the electrode plate becomes more flexible when the roll-pressing pressure decreases.

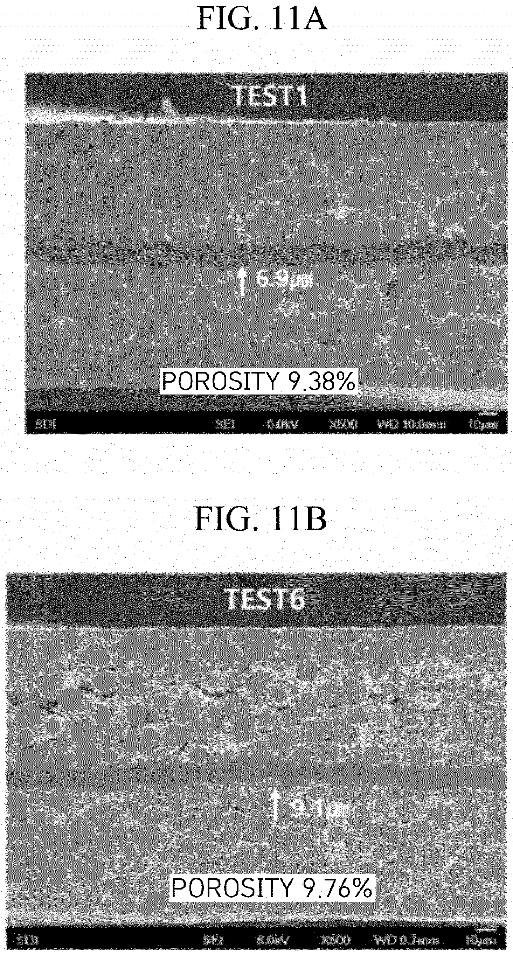

FIGS. 11A and 11B are scanning electron microscope (SEM) cross-sectional images of single-stage roll-pressing (FIG. 11A) and double-stage roll-pressing (FIG. 11B) and porosity analysis values using mercury intrusion porosimetry. The porosity was increased to 9.76% by using the double-stage roll-pressing, which shows that the electrode surface became more flexible due to the increased porosity. That is, FIGS. 11A and 11B show a causal relationship of decreased roll-pressing pressure → increased porosity → decreased bending force. In addition, FIGS. 11A and 11B show that the thickness of the substrate (aluminum foil in this example) of the electrode plate is increased from 6.9 um to 9.1 um during the double-stage roll-pressing compared to the single-stage roll-pressing. This means that the damage to the electrode is reduced by reducing the pressure applied to the electrode.

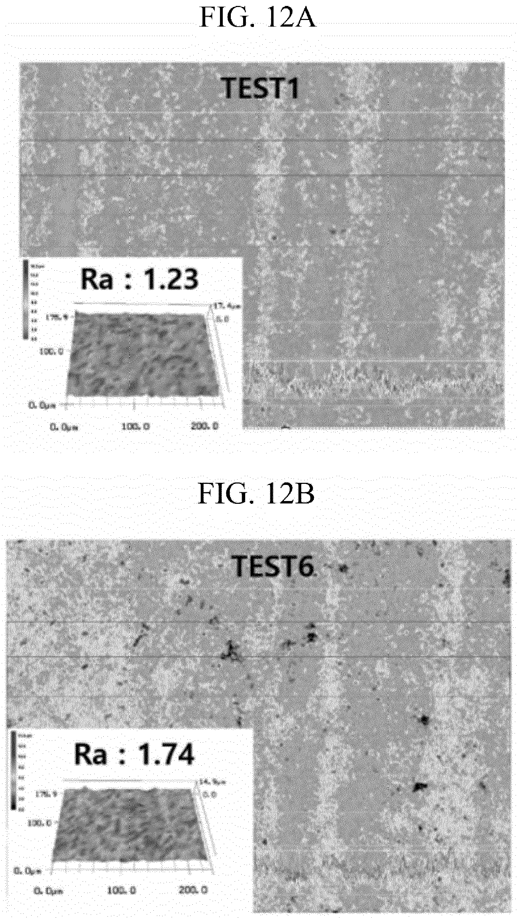

FIGS. 12A and 12B are 3D profiler analysis images of the electrode plate during single-stage roll-pressing (FIG. 12A) and double-stage roll-pressing (FIG. 12B). FIGS. 12A and 12B show that the surface roughness of the electrode plate was increased from Ra=1.23 to 1.74 by using double-stage roll-pressing according to an embodiment of the present disclosure. The increased surface roughness of the electrode plates is beneficial for electrolyte impregnation during the battery assembly process.

A meander (e.g., a camber effect) of the electrode plate was tested during the single and double-stage roll-pressing. For a 4 m long electrode plate, when measured at an end of the 4 m long electrode plate, it was observed that in the case of the single-stage roll-pressing, there was a meander of about 160.5 mm, and in the case of the double-stage roll-pressing according to embodiments of the present disclosure, the meander was significantly reduced to about 45.2 mm.

According to an embodiment of the present disclosure, by diversifying the surface roughness of a press roller and the number of times roll-pressing is performed (number of stages), the roll-pressing pressure necessary to achieve the target thickness can be reduced. Accordingly, damage to an electrode plate can be reduced or mitigated, reduction in bending force of the electrode plate (an indicator of the force required to bend the electrode), electrode surface flexibility due to increased porosity, an improvement of electrolyte impregnation due to the increase in surface roughness of the electrode plate, a reduction of meanders (camber effect) of the electrode plate, and the like, can be achieved.

Although the present disclosure has been described above with respect to embodiments thereof, the present disclosure is not limited thereto. Various modifications and variations can be made thereto by those skilled in the art within the scope of the present disclosure and the scope of the appended claims.

## Claims

1. An apparatus for roll-pressing an electrode plate of a secondary battery, the apparatus comprising:
a first-stage press roller and a second-stage press roller configured to sequentially roll-press the electrode plate,
wherein a surface of the first-stage press roller configured to contact the electrode plate has a first roughness, and
wherein a surface of the second-stage press roller configured to contact the electrode plate has a second roughness.

2. The apparatus as claimed in claim 1, wherein the first-stage press roller comprises a first-surface press roller configured to contact a first surface of the electrode plate and a second-surface press roller configured to contact a second surface of the electrode plate, and
wherein the second-stage press roller comprises a first-surface press roller configured to contact the first surface of the electrode plate and a second-surface press roller configured to contact the second surface of the electrode plate.

3. The apparatus as claimed in claim 1 or 2, wherein the first roughness and the second roughness have the same Ra value.

4. The apparatus as claimed in claim 1 or 2, wherein the first roughness and the second roughness have different Ra values.

5. The apparatus as claimed in claim 1, 2 or 4, wherein the first roughness has a smaller Ra value than the second roughness.

6. The apparatus as claimed in any preceding claim, wherein at least one of the first roughness and the second roughness has a Ra value in a range of 0.02 to 0.09.

7. The apparatus as claimed in any one of claims 1 to 5, wherein at least one of the first roughness and the second roughness has a Ra value in a range of 0.5 to 1.5.

8. An apparatus for manufacturing an electrode plate of a secondary battery, the apparatus comprising:
a rolling unit comprising the apparatus for roll-pressing an electrode plate of a secondary battery according to claim 1.

9. The apparatus as claimed in claim 8, wherein the first-stage press roller comprises a first-surface press roller configured to contact a first surface of the electrode plate and a second-surface press roller configured to contact a second surface of the electrode plate, and
wherein the second-stage press roller comprises a first-surface press roller configured to contact the first surface of the electrode plate and a second-surface press roller configured to contact the second surface of the electrode plate.

10. The apparatus as claimed in claim 8 or 9, wherein the first roughness and the second roughness have the same Ra value.

11. The apparatus as claimed in claim 8 or 9, wherein the first roughness and the second roughness have different Ra values.

12. The apparatus as claimed in claim 8, 9 or 11, wherein the first roughness has a smaller Ra value than the second roughness.

13. The apparatus as claimed in any one of claims 8 to 12, wherein at least one of the first roughness and the second roughness has a Ra value in a range of 0.02 to 0.09.

14. The apparatus as claimed in any one of claims 8 to 12, wherein at least one of the first roughness and the second roughness has a Ra value in a range of 0.5 to 1.5.

15. A method of manufacturing an electrode plate of a secondary battery, the method comprising:
roll-pressing the electrode plate with a first-stage press roller; and
roll-pressing the roll-pressed electrode plate by using a second-stage press roller,
wherein a surface of the first-stage press roller configured to contact the electrode plate has a first roughness, and
wherein a surface of the second-stage press roller configured to contact the electrode plate has a second roughness.
